(19) 

**Europäisches Patentamt**
**European Patent Office**
**Office européen des brevets**

(11) **EP 4 708 048 A1**

(12) **EUROPEAN PATENT APPLICATION**
published in accordance with Art. 153(4) EPC

(43) Date of publication:
**11.03.2026 Bulletin 2026/11**

(21) Application number: **24810250.1**

(22) Date of filing: **13.05.2024**

(51) International Patent Classification (IPC):
**G06F 9/50** (2006.01)

(52) Cooperative Patent Classification (CPC):
**G06F 9/50; H04L 43/0852; H04L 47/762**

(86) International application number:
**PCT/CN2024/092825**

(87) International publication number:
**WO 2024/240003 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023 CN 202310590809**

(71) Applicant: **Huawei Technologies Co., Ltd.
Shenzhen, Guangdong 518129 (CN)**

(72) Inventors:
• **YEUNG, Gingfung Matthew
Shenzhen, Guangdong 518129 (CN)**
• **WANG, Jianfeng
Shenzhen, Guangdong 518129 (CN)**

(74) Representative: **Körber, Martin Hans
Mitscherlich PartmbB
Karlstraße 7
80333 München (DE)**

(54) **DELAY-SENSING-BASED SERVERLESS REQUEST SCHEDULING APPARATUS AND SYSTEM**

(57) This application relates to a latency-aware-based serverless request scheduling apparatus and system. The apparatus includes: a first scheduling module that determines a determined user request at a queue head of a current request queue as a target user request, and sends a pod creation request to a second scheduling module when determining that a target pod that meets an execution condition and that is to execute the target user request is absent; and the second scheduling module that, when determining, based on the pod creation request, that a new pod meets a node creation condition, selects a target node from a plurality of nodes, creates the new pod in the target node, and sends information about the new pod to the first scheduling module. The first scheduling module manages the new pod based on the received information about the new pod, determines the new pod as a target pod, and sends the target user request to the target pod for execution. In this way, node resources can be used more efficiently, and an SLO violation rate can be reduced.

FIG. 2

**Description**

This application claims priority to Chinese Patent Application No. 202310590809.3, filed with the China National Intellectual Property Administration on May 23, 2023 and entitled "LATENCY-AWARE-BASED SERVERLESS REQUEST SCHEDULING APPARATUS AND SYSTEM", which is incorporated herein by reference in its entirety.

**TECHNICAL FIELD**

This application relates to the field of computer technologies, and in particular, to a latency-aware-based serverless request scheduling apparatus and system.

**BACKGROUND**

With the development of the cloud computing industry in recent years, more front-line engineers deploy their applications on serverless platforms because serverless can reduce operation and maintenance overheads of a large quantity of underlying resources for service teams, and developers can focus more on code logic of services without worrying about complex configuration of underlying resources.

According to Berkeley's paper published in February 2019, serverless is a development trend of cloud computing in the next decade. In recent years, more open-source serverless platforms, such as Knative and Open Whisk, have emerged (due to popularity and features of K8s, most open-source serverless platforms use K8s (Kubernetes) as a cluster management foundation). As more services are attached to the serverless platform, new requirements and challenges are also posed on the serverless platform. Especially for a short-term running latency-sensitive request (a user request is a synchronous request and carries an SLO objective), the serverless platform in a related technology cannot resolve a problem of violating an SLO. How to resolve this technical problem is a top priority of research.

**SUMMARY**

In view of this, a latency-aware-based serverless request scheduling apparatus, system, and method are proposed.

According to one aspect, an embodiment of this application provides a latency-aware-based serverless request scheduling apparatus. The apparatus includes a first scheduling module and a second scheduling module.

The first scheduling module is configured to: determine a determined user request at a queue head of a current request queue as a target user request, and send a pod creation request to the second scheduling module when determining that a target pod that meets an execution condition and that is to execute the target user request is absent.

The second scheduling module is configured to: when receiving the pod creation request and determining, based on the pod creation request, that a new pod meets a node creation condition, select a target node from a plurality of nodes, create the new pod in the target node, and send information about the new pod to the first scheduling module.

The first scheduling module is further configured to manage the new pod based on the received information about the new pod, determine the new pod as a target pod, and send the target user request to the target pod, so that the target pod executes the received target user request.

According to the foregoing apparatus, when the target pod that meets the execution condition is absent, the target node that meets the node creation condition may be selected to create the new pod, and the new pod is determined as the target pod that is to execute the target user request. A node selection policy may be optimized. The pod is reused/created in the target node with a current strongest processing capability, to reduce a platform request scheduling latency, more effectively use node resources, and reduce an SLO violation rate.

In a possible implementation, the execution condition is that a sum of estimated duration for processing the target user request, total network communication duration, and total duration for which a pod processes all user requests in a current task queue is less than remaining duration from current time to violating an SLO of the target user request. In this way, the target pod that is most suitable for executing the target user request may be selected based on the SLO and the target user request, to reduce queuing duration of the user request and reduce an SLP violation rate.

In a possible implementation, the node creation condition is that a sum of cold start duration of a pod, duration required for the first scheduling module to manage the new pod, and estimated duration for processing the target user request is less than remaining duration from current time to violating an SLO of the target user request. In this way, a node processing capability may be sensed, and the target node is selected based on indicators such as historical request processing time, a historical SLO violation rate, and a current remaining amount of a node hardware resource, to reduce the SLP violation rate.

In a possible implementation, the first scheduling module is further configured to: receive a new user request; and when determining that the user request meets a receiving condition, add the user request to the current request queue based on an SLO deadline of the user request. In this way, when the new user request is received, it may be determined whether the cluster can execute the user request without violating the SLO, to reduce the SLO violation rate.

In a possible implementation, the first scheduling module is further configured to: when determining that the user request does not meet a receiving condition, determine that the user request fails to be executed, and return a request failure report.

In a possible implementation, the receiving condition is that a sum of an average latency of processing the user request by a cluster, a queuing latency of the user request in the current request queue, and a network transmission latency in the cluster is less than remaining duration from current time to violating the user request. In this way, a capability of processing the user request by the entire apparatus and the cluster may be comprehensively considered, to determine whether the user request can be executed without violating the SLO.

In a possible implementation, the first scheduling module is further configured to: when determining that the target pod that meets the execution condition and that is to execute the target user request is present, determine a pod that meets the execution condition as the target pod, and send the target user request to the target pod. In this way, when the target pod that meets the execution condition is present, the target user request may be directly sent to the target pod for execution, to improve execution efficiency of the user request, reduce a queuing latency, and reduce the SLO violation rate.

In a possible implementation, determining the pod that meets the execution condition as the target pod includes:

selecting a pod with a lowest load as a candidate pod from a plurality of currently managed pods by using an SLO model and task queue information of each pod; and
when the candidate pod meets the execution condition, determining the candidate pod as the target pod.

In this way, the candidate pod may be selected based on the preset SLO model, to improve efficiency, a speed, and accuracy of selecting the target pod.

In a possible implementation, the second scheduling module is further configured to: when determining, based on the pod creation request, that the new pod does not meet the node creation condition, determine that the target user request fails to be executed, and return a request failure report. In this way, a user may be notified of an execution status of the target user request in a timely manner, so that the user can perform responding and processing in a timely manner.

In a possible implementation, selecting the target node from the plurality of nodes, and creating the new pod in the target node includes:

determining, by using a utility model and cluster status information, the target node from a node that meets a node condition in a plurality of nodes of a cluster; and
creating the new pod in the target node, where
the cluster status information includes resource utilization of each node, and the node condition is that a P95 latency of processing the target user request at a node level is less than remaining duration from current time to violating an SLO of the target user request.

In this way, the target node is selected by using the model, so that a speed and efficiency of selecting the target node can be improved.

According to another aspect, an embodiment of this application provides a latency-aware-based serverless request scheduling system, including a latency-aware-based serverless request scheduling apparatus and a serverless computing resource cluster. The apparatus includes a first scheduling module and a second scheduling module. The serverless computing resource cluster includes a plurality of nodes, and each node includes at least one pod.

The first scheduling module is configured to: determine a determined user request at a queue head of a current request queue as a target user request, and send a pod creation request to the second scheduling module when determining that a target pod that meets an execution condition and that is to execute the target user request is absent.

The second scheduling module is configured to: when receiving the pod creation request and determining, based on the pod creation request, that a new pod meets a node creation condition, select a target node from a plurality of nodes, create the new pod in the target node, and send information about the new pod to the first scheduling module.

The first scheduling module is further configured to manage the new pod based on the received information about the new pod, determine the new pod as a target pod, and send the target user request to the target pod, so that the target pod executes the received target user request.

In a possible implementation, the execution condition is that a sum of estimated duration for processing the target user request, total network communication duration, and total duration for which a pod processes all user requests in a current task queue is less than remaining duration from current time to violating an SLO of the target user request.

In a possible implementation, the node creation condition is that a sum of cold start duration of a pod, duration required for the first scheduling module to manage the new pod, and estimated duration for processing the target user request is less than remaining duration from current time to violating an SLO of the target user request.

In a possible implementation, the first scheduling module is further configured to: receive a new user request; and when determining that the user request meets a receiving condition, add the user request to the current request queue based on an SLO deadline of the user request.

In a possible implementation, the first scheduling module is further configured to: when determining that the user request does not meet a receiving condition, determine that the user request fails to be executed, and return a request failure report.

In a possible implementation, the receiving condition is that a sum of an average latency of processing the user request by a cluster, a queuing latency of the user request in the current request queue, and a network transmission latency in the cluster is less than remaining duration from current time to violating the user request.

In a possible implementation, the first scheduling module is further configured to: when determining that the target pod that meets the execution condition and that is to execute the target user request is present, determine a pod that meets the execution condition as the target pod, and send the target user request to the target pod.

In a possible implementation, determining the pod that meets the execution condition as the target pod includes:

selecting a pod with a lowest load as a candidate pod from a plurality of currently managed pods by using an SLO model and task queue information of each pod; and
when the candidate pod meets the execution condition, determining the candidate pod as the target pod, where the system further includes a data repository, and the task queue information is sent by the data repository.

In a possible implementation, the second scheduling module is further configured to: when determining, based on the pod creation request, that the new pod does not meet the node creation condition, determine that the target user request fails to be executed, and return a request failure report.

In a possible implementation, selecting the target node from the plurality of nodes, and creating the new pod in the target node includes:

determining, by using a utility model and cluster status information, the target node from a node that meets a node condition in a plurality of nodes of a cluster; and
creating the new pod in the target node, where
the cluster status information includes resource utilization of each node, the system further includes a data repository, the cluster status information is sent by the data repository, and the node condition is that a P95 latency of processing the target user request at a node level is less than remaining duration from current time to violating an SLO of the target user request.

Beneficial effects of the latency-aware-based serverless request scheduling system provided in the another aspect and the possible implementations of the another aspect are the same as those of the latency-aware-based serverless request scheduling apparatus provided in the one aspect and the possible implementations of the one aspect. To avoid redundancy, details are not described herein again.

According to still another aspect, an embodiment of this application provides a latency-aware-based serverless request scheduling method. The method includes:

determining a determined user request at a queue head of a current request queue as a target user request, and generating a pod creation request when determining that a target pod that meets an execution condition and that is to execute the target user request is absent;
when determining, based on the pod creation request, that a new pod meets a node creation condition, selecting a target node from a plurality of nodes, creating the new pod in the target node, and determining information about the new pod; and
managing the new pod based on the information about the new pod, determining the new pod as a target pod, and sending the target user request to the target pod, so that the target pod executes the received target user request.

Beneficial effects of the latency-aware-based serverless request scheduling method provided in the still another aspect and the possible implementations of the still another aspect are the same as those of the latency-aware-based serverless request scheduling apparatus provided in the one aspect and the possible implementations of the one aspect. To avoid redundancy, details are not described herein again.

In a possible implementation, the execution condition is that a sum of estimated duration for processing the target user request, total network communication duration, and total duration for which a pod processes all user requests in a current task queue is less than remaining duration from current time to violating an SLO of the target user request.

In a possible implementation, the node creation condition is that a sum of cold start duration of a pod, duration required for the first scheduling module to manage the new pod, and estimated duration for processing the target user request is less than remaining duration from current time to violating an SLO of the target user request.

In a possible implementation, the method further includes: receiving a new user request; and when determining that the user request meets a receiving condition, adding the user request to the current request queue based on an SLO deadline of the user request.

In a possible implementation, the method further includes: when determining that the user request does not meet a receiving condition, determining that the user request fails to be executed, and returning a request failure report.

In a possible implementation, the receiving condition is that a sum of an average latency of processing the user request by a cluster, a queuing latency of the user request in the current request queue, and a network transmission latency in the cluster is less than remaining duration from current time to violating the user request.

In a possible implementation, the method further includes:
when determining that the target pod that meets the execution condition and that is to execute the target user request is present, determining a pod that meets the execution condition as the target pod, and sending the target user request to the target pod.

In a possible implementation, determining the pod that meets the execution condition as the target pod includes:

selecting a pod with a lowest load as a candidate pod from a plurality of currently managed pods by using an SLO model and task queue information of each pod; and
when the candidate pod meets the execution condition, determining the candidate pod as the target pod.

In a possible implementation, the method further includes: when determining, based on the pod creation request, that the new pod does not meet the node creation condition, determining that the target user request fails to be executed, and returning a request failure report.

In a possible implementation, selecting the target node from the plurality of nodes, and creating the new pod in the target node includes:

determining, by using a utility model and cluster status information, the target node from a node that meets a node condition in a plurality of nodes of a cluster; and
creating the new pod in the target node, where
the cluster status information includes resource utilization of each node, and the node condition is that a P95 latency of processing the target user request at a node level is less than remaining duration from current time to violating an SLO of the target user request.

According to yet another aspect, an embodiment of this application provides a latency-aware-based serverless request scheduling apparatus, including:
a processor; and a memory configured to store instructions executable by the processor, where the processor is configured to implement the foregoing method when executing the instructions.

According to yet another aspect, an embodiment of this application provides a non-volatile computer-readable storage medium. The non-volatile computer-readable storage medium stores computer program instructions. When the computer program instructions are executed by a processor, the foregoing method is implemented.

According to yet another aspect, an embodiment of this application provides a computer program product. The computer program product includes computer-readable code or a non-volatile computer-readable storage medium carrying the computer-readable code. When the computer-readable code is run in an electronic device, a processor of the electronic device performs the foregoing method.

These aspects and other aspects of this application are more concise and more comprehensive in descriptions of the following (a plurality of) embodiments.

## BRIEF DESCRIPTION OF DRAWINGS

The accompanying drawings included in this specification and constituting a part of this specification and this specification jointly show example embodiments, features, and aspects of this application, and are intended to explain the principles of this application.

FIG. 1 is a schematic flowchart of a related technology 1;
FIG. 2 is a block diagram of a latency-aware-based serverless request scheduling apparatus and system according to an embodiment of this application;
FIG. 3 is a flowchart of a latency-aware-based serverless request scheduling method according to an embodiment of this application;

FIG. 4 is a diagram of a parameter configuration interface according to an embodiment of this application;

FIG. 5 is a diagram of an image beautification process according to an embodiment of this application;

FIG. 6 is a diagram of user request allocation according to an embodiment of this application; and

FIG. 7 is a block diagram of a structure of a computing device according to an embodiment of this application.

## DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as "an example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

For better understanding of this application, the following first describes terms used in this application.

Platform as a service (Platform as a Service, PaaS): is a business mode that provides a server platform as a service. A service of providing a program over a network is referred to as SaaS (Software as a Service), which is one of three service modes of cloud computing. In the cloud computing era, a corresponding server platform or development environment is provided as a service, namely, PaaS.

Serverless (Serverless): is a model of cloud computing. Serverless computing provides a mini-architecture based on the platform as a service (PaaS). A terminal customer does not need to deploy, configure, or manage a server service, and all server services required for code running are provided by a cloud platform.

Function as a service (Function as a service, FaaS): also referred to as a function-as-a-service, is a service or technology in which an individual function is modularized so that the modularized function is shared by a service provider and a user, namely, the function-as-a-service or a global function is provided as a service. For example, in a network application, a function may require only one line of code. However, provided that the function is re-encapsulated into a remote invocation service, a small quantity of resources may be used to execute a task, which greatly reduces development and maintenance time and costs.

Service-level objective (Service-level objective, SLO): is a quantitative indicator of service assurance provided by a service provider for a customer. For example, a cloud provider guarantees to a customer that processing latencies of requests with the SLO of 95% do not exceed 300 ms.

Multi-access edge computing (Multi-access Edge Computing, MEC): is a network solution in which a service and a computing function required by a user are provided at an edge node, so that an application service and content are closer to the user and network collaboration is implemented, to provide reliable and ultimate service experience for the user.

Pod (Plain old data structure): is minimum unit for Kubernetes creation or deployment. A pod encapsulates one or more containers, storage resources, an independent network IP address, and a policy option for managing and controlling a running mode of the container. In a serverless scenario, one or more pods are usually used to load developer code and deploy a developer service.

Node (node): is a worker node in Kubernetes. A node may be a virtual machine (Virtual Machine, VM) or a physical machine. Each node has some necessary services for running the pod.

Latency-aware queue model: During entry of a queue (that is, a task queue), the task queue is sorted based on a deadline (emergency) calculated by using an SLO of a user request. During exit of the queue (that is, the task queue), the user request is allocated to a pod with a lowest current load.

Request: is a user-oriented service request. In a serverless scenario, the manifestation is that a user sends an http request to a cloud via a terminal to request a cloud cluster to process a payload (payload) carried in the request. After cloud computing is completed, a computing result is returned to the terminal.

Queue queuing latency: is time required for a task request from entering a queue (that is, a task queue) to exiting the queue (that is, the task queue).

In a related technology, there are several different technical solutions. The following describes the solutions in the related technology.

Related technology 1:

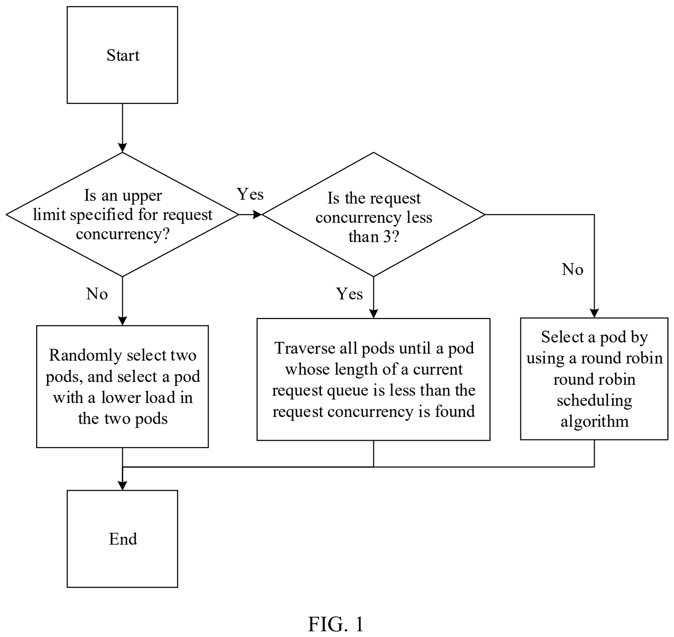

As shown in FIG. 1, in Knative, after a user request is received, it is first determined whether an upper limit is specified for request concurrency. If it is determined that no upper limit is specified, two pods are randomly selected, and then a pod with a lower load is further selected from the two pods to process the user request. If it is determined that the upper limit is specified, determining whether the request concurrency is less than 3 (assuming that the upper limit for the request concurrency is 3) continues to be performed. If it is determined that the request concurrency is less than 3, all pods are traversed until a pod whose current request queue length is less than the request concurrency is found, and it is determined that the pod executes the user request. If it is determined that the request concurrency is greater than or equal to 3, a pod for executing the user request is selected by using a round robin round robin scheduling algorithm.

It can be learned that Knative schedules a subsequent incoming user request in consideration of the request concurrency configured by the user and a length of a current pod task queue. However, the following problems exist: A current request scheduling policy of Knative cannot meet a latency-sensitive scenario because processing latencies of different requests vary greatly. For example, for an image processing function with similar heavy computational loads, a processing latency fluctuates greatly depending on a size of each request image. If only the queue length is considered or round robin is simply used on an existing serverless platform, when a pod takes excessively long time to process a single request (a request output data amount is large or a hardware resource such as an underlying CPU is not suitable for processing this type of request), there is a high possibility that a subsequent request queue latency increases, and a large quantity of requests violate the SLO. In a worse case, all requests in a subsequent waiting queue of the pod time out.

Related technology 2:

Many serverless platforms reuse, at underlying layers, a resource scheduling capability provided by K8s. When a K8s scheduling component (usually referred to as a scheduler) receives a notification for a pod creation request, K8s mainly places a pod on a node with a highest score according to filter (filter) and score (score) policies. In a filter phase, nodes are filtered based on dimensions such as a remaining resource amount and a label. In a score phase, existing nodes are scored based on dimensions such as resource utilization, an image location, and pod affinity. A node with a highest score is bound to a pod. However, the following problems exist: A current pod binding policy does not consider a processing capability of underlying hardware of a node. For example, due to a hardware resource limitation, heterogeneous nodes may exist in an MEC data center. There are specific differences in specifications and CPU and memory models of different nodes, and resulting request processing capabilities also vary. If K8s cannot sense node differences, the user request may be scheduled to a node that runs slowly, causing a large quantity of requests to violate the SLO.

Related technologies mainly have the following problems:

An SLO objective is not sensed: If the serverless platform cannot sense an SLO objective carried in a request, a resource scheduling component usually allocates request payloads to various nodes evenly based on a quantity of requests. This may cause an excessively long queuing latency for some request queues of the latency-sensitive function, causing SLO violation.

A node processing capability is not sensed: The serverless platform cannot sense utilization of an underlying hardware resource, a historical SLO violation rate, and a historical request processing latency of an edge computing node. As a result, the request is allocated to a computing resource with slow execution, violating the SLO objective specified by the user.

Embodiments of this application provide a latency-aware-based serverless request scheduling method, apparatus, and system, to resolve the following problems in request load balancing of a serverless platform in a related technology: (1) An SLO carried in a user request is not considered, and consequently, in some scenarios, a large quantity of requests violate the SLO objective. (2) Heterogeneity of platform underlying resources is not considered, and consequently, requests are scheduled to some nodes with a low processing capability, causing request stacking. Further, according to the method, the apparatus, and the system provided in embodiments of this application, a request queue load balancing policy can be optimized, a request processing latency is determined based on a size of a request, and a pod with a shortest queue queuing latency is selected to process a to-be-allocated request without a need to additionally set request queue concurrency. A node selection policy can also be optimized. A pod is reused/created in a current node with a strongest processing capability based on indicators such as historical request processing time, a historical SLO violation rate, and a current remaining amount of a node hardware resource. In this way, a platform request scheduling latency (queuing latency + processing latency) is reduced, node resources are used more effectively, and an SLO violation rate is reduced.

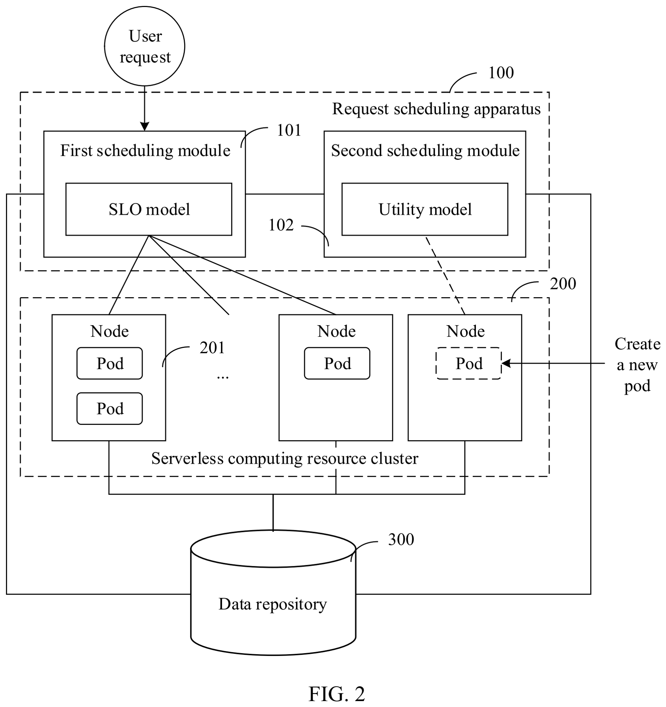

As shown in FIG. 2, a latency-aware-based serverless request scheduling system (also referred to as a request scheduling system in this specification) provided in this application includes a latency-aware-based serverless request scheduling apparatus (also referred to as a request scheduling apparatus in this specification) 100, a serverless computing resource cluster (also briefly referred to as a cluster in this specification) 200, and a data repository (Telemetry Repository) 300. The serverless computing resource cluster 200 includes a plurality of nodes (Node) 201. The request scheduling apparatus 100 includes a first scheduling module 101 and a second scheduling module 102. Each node includes one or more pods. In some embodiments, the request scheduling apparatus 100 may further include a data repository (different from that shown in FIG. 2). A person skilled in the art may set the request scheduling apparatus according to an actual requirement. This is not limited in the present disclosure.

In some embodiments, the first scheduling module 101 may be a request-level load balancing component (Load Balancer, LB, also referred to as a load scheduler) of the request scheduling system. In some embodiments, the second scheduling module 102 may be a computing resource-level load balancing scheduler (Scheduler) of the system.

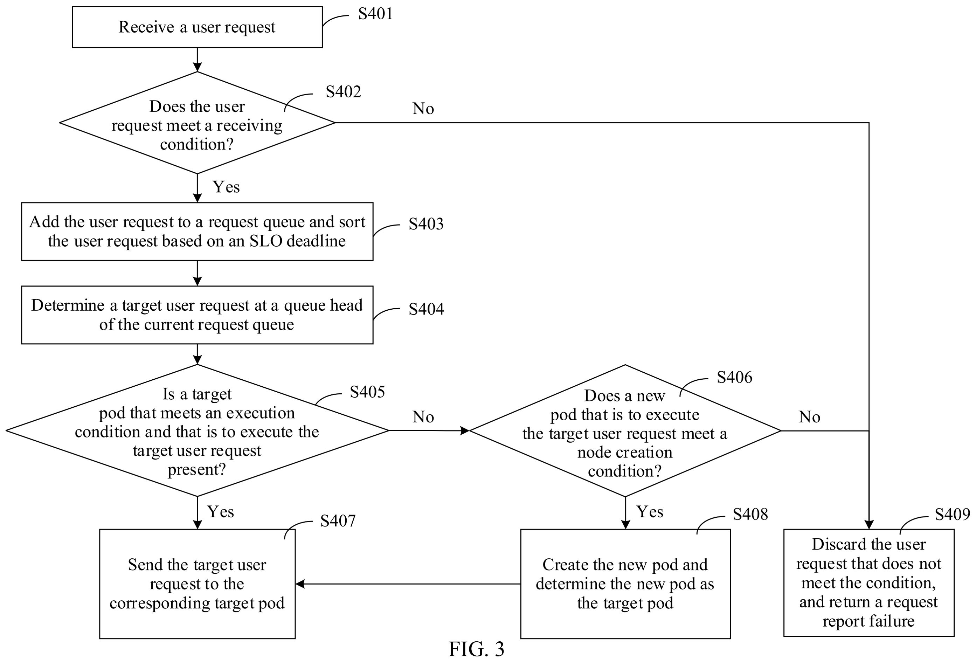

With reference to FIG. 3, the following describes a working process and principle of the request scheduling system and apparatus shown in FIG. 2.

The first scheduling module 101 is configured to receive a new user request (user request) (S401); then determine whether the received new user request meets a receiving condition (S402); and when determining that the user request meets the receiving condition, add the user request to a request queue, and enable the new user request to be added to the current request queue based on an SLO deadline; or when determining that the user request does not meet the receiving condition, determine that the user request fails to be executed, discard the user request, and return a request failure report (S409). In this way, when the new user request is received, it may be determined whether the cluster can execute the user request without violating an SLO, to reduce an SLO violation rate.

In some embodiments, the receiving condition may be that a sum of an average latency of processing the user request by a cluster, a queuing latency of the user request in the current request queue, and a network transmission latency in the cluster is less than remaining duration from current time to violating the user request. In this way, a capability of processing the user request by the entire apparatus and the cluster may be comprehensively considered, to determine whether the user request can be executed without violating the SLO. In other words, the receiving condition may be represented as:

$$T(\text{input, cluster}) + T(\text{queuing latency}) + T(\text{network}) < T(\text{current deadline})$$

T(input, cluster) is the average latency of processing the user request by the cluster. T(queuing latency) is the queuing latency of the user request in the current request queue. T(network) is the network transmission latency in the cluster. T(current deadline) is the remaining duration from the current time to violating the user request.

In this way, when receiving the user request, the first scheduling module 101 performs determining based on the receiving condition, so that all user requests placed in the request queue may be completed without violating the SLO.

The first scheduling module 101 is further configured to determine, based on the current request queue, a user request at a queue head of the current request queue as a target user request (S404); then determine whether a target pod that meets an execution condition for the target user request (S405) is present; and if the target pod that meets the execution condition is present, directly route the target user request to the target pod (S407), so that the target pod can execute the received target user request; or if the target pod that meets the execution condition is absent, generate a pod creation request, and send the pod creation request to the second scheduling module 102. In this way, when the target pod that meets the execution condition is present, the target user request may be directly sent to the target pod for execution, to improve execution efficiency of the user request, reduce a queuing latency, and reduce the SLO violation rate. When the target pod that meets the execution condition is absent, the target node that meets the node creation condition may be selected to create the new pod, and the new pod is determined as the target pod that is to execute the target user request. A node selection policy may be optimized. The pod is reused/created in the target node with a current strongest processing capability, to reduce a platform request scheduling latency, more effectively use node resources, and reduce the SLO violation rate.

In some embodiments, the execution condition may be that a sum of estimated duration for processing the target user request, total network communication duration, and total duration for which a pod processes all user requests in a current task queue is less than remaining duration from current time to violating an SLO of the target user request. In other words, the execution condition may be represented as: T(input, Pod) + T(queuing latency, Pod) + T0 < T(current deadline). T(input, Pod) is the estimated duration for which the corresponding pod processes the target user request, and the estimated duration may be determined based on an input size of the target user request. T(queuing latency, Pod) is the total duration for which the pod processes all the user requests in the current task queue. T0 is network communication duration for the target user request, such as system scheduling performed for the target user request, where T0 = constant + Δt may be set, and Δt is random disturbance (with a dynamic distribution rule). In this way, the target pod that is most suitable for executing the target user request may be selected based on the SLO and the target user request, to reduce queuing duration of the user request and reduce an SLP violation rate.

In some embodiments, the first scheduling module 101 may determine the target pod that meets the execution condition in the following manner: selecting a pod with a lowest load as a candidate pod from a plurality of currently managed pods by using an SLO model and task queue information of each pod; and when the candidate pod meets the execution condition, determining the candidate pod as the target pod. The task queue information of each pod may be used as an input of the SLO model to measure a load status of each pod and calculate and output the pod with the lowest current load. The candidate pod is selected based on the preset SLO model, to improve efficiency, a speed, and accuracy of selecting the target pod.

The task queue information may include a processing latency *Processing Latency* of a node, all SLO time windows *SLO time window*, a quantity *SLO violation Request Counter* of user requests that violate an SLO, a quantity *Request Counter* of processed user requests, resource utilization of a current node, and the like. This is not limited in this application.

In some embodiments, a load cost of each pod may be calculated by using the following formula:

$$Cost = w_0 * \left(\frac{Processing\ Latency}{SLO\ timewindow}\right)^{n_0} + w_1 * \left(\frac{SLO\ violation\ Request\ Counter}{Request\ Counter}\right)^{n_1} + w_2 * (Util\ cost)^{n_3}$$

$\frac{Processing\ Latency}{SLO\ time\ window}$ is a ratio of the processing latency *Processing Latency* to all the SLO time windows *SLO time window*. $\frac{SLO\ violation\ Request\ Counter}{Request\ Counter}$ is a ratio of the quantity *SLO violation Request Counter* of user requests that violate the SLO to the quantity *Request Counter* of all the processed user requests. *Util cost* is a score calculated based on the resource utilization of the current node. For example, if a cluster administrator expects to maintain CPU resource utilization of a node at X%, a formula of a utility cost item may be set based on X%. This is not limited in this application.

After receiving the pod creation request, the second scheduling module 102 determines a new pod based on the pod creation request, and then determines whether the new pod meets a node creation condition (S406); and if the new pod does not meet the node creation condition, determines that the target user request fails to be executed, discards the target user request, and returns a request failure report (S409); or if the new pod meets the node creation condition, determines, by using a utility model based on cluster status information sent by the data repository 300, a target node from a node that meets a node condition in the plurality of nodes 201 in the cluster 200, then creates a new pod in the target node, and sends information about the new pod to the first scheduling module 101, so that the first scheduling module 101 can manage the new pod based on the information about the new pod (S408). The second scheduling module 102 may apply to the data repository 300 for the cluster status information before selecting the target node by using the cluster status information, so that the data repository 300 may return current latest cluster status information to the second scheduling module 102 in a timely manner. In some embodiments, the cluster status information may include resource utilization of each node. In this case, the second scheduling module 102 may determine, from the plurality of nodes by using the utility model and the resource utilization of each node, the target node in which the new pod can be created, and then scale up a quantity of pods in the target node to create the new pod.

In some embodiments, the node creation condition may be that a sum of cold start duration of a pod, duration required for the first scheduling module to manage the new pod, and estimated duration for processing the target user request is less than remaining duration from current time to violating an SLO of the target user request. In other words, the node creation condition may be represented as: T(cold start) + T(acquire new Pod) + T(input) < T(current deadline). T(cold start) is the cold start duration. T(acquire new pod) is the duration required for the first scheduling module to manage the new pod. T(input) is the estimated duration for the new pod to process the target user request. The estimated duration may be determined based on an input size of the target user request. In this way, a node processing capability may be sensed, and the target node is selected based on indicators such as historical request processing time, a historical SLO violation rate, and a current remaining amount of a node hardware resource, to reduce the SLP violation rate.

In some embodiments, the node condition may be that a P95 latency of processing the target user request at a node level is less than remaining duration from current time to violating an SLO of the target user request. In other words, the node condition may be represented as: T(input, P95) < T(current deadline). T(input, P95) is the P95 latency of processing the target user request at the node level. The P95 latency may indicate that latencies of processing the target user request by the nodes are sorted in ascending order at locations of 95%.

In some embodiments, the data repository 300 is configured to: monitor a status of each pod, record a current task queue status of each active (available) pod to form task queue information, monitor resource utilization of a node 201 in which each pod is located, send the task queue information of each pod to the first scheduling module 101, and send the resource utilization of each node 201 as cluster status information to the second scheduling module 102 in response to an application of the second scheduling module 102.

In some embodiments, in a process of executing the target user request by the pod in each node 201, the node 201 may monitor and record node-related information such as an execution latency of the target user request, a task queue status such as a current task queue latency of each pod in the node 201, a parameter size of the target user request, and the resource utilization of the node 201, and then send the node-related information to the data repository 300 in real time.

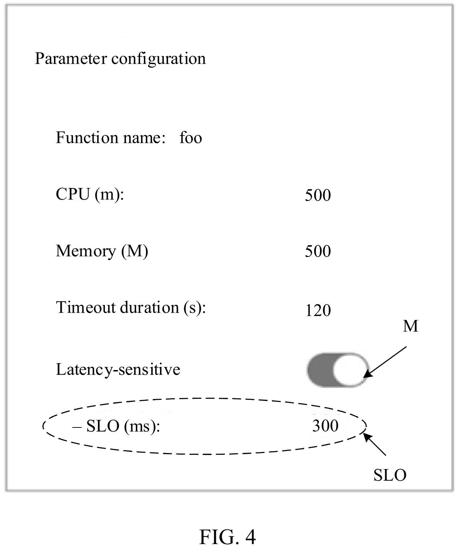

In a possible implementation, the apparatus may further include an SLO determining module. The target determining module is configured to determine, based on a user operation, an SLO indicated by a user. In some embodiments, the SLO determining module may display a parameter configuration interface shown in FIG. 4 to the user, and may display an on/off control M in the parameter configuration interface. The SLO determining module may determine, based on an operation of the user on the on/off control M, the SLO indicated by the user.

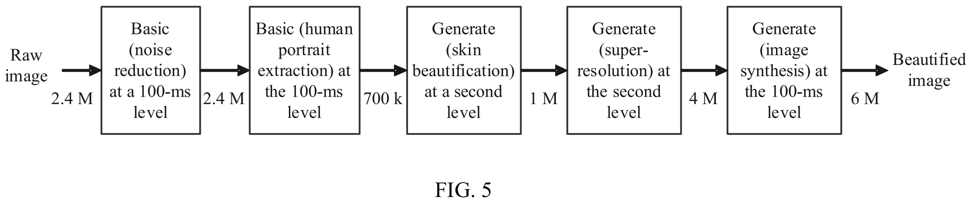

The following describes a working process and a principle of the request scheduling system in this embodiment of this application by using an example provided in FIG. 5. As shown in FIG. 5, a mobile phone image beautification in a device-cloud collaboration scenario is used as an example. A user needs to upload an image to a cloud. After receiving a user request for processing the image, a request scheduling system of the cloud needs to allocate a target pod of a processing function to each image to complete a series of image processing operations. The image needs to undergo a plurality of function pods in a form of a pipeline (pipeline), to ultimately complete image beautification. In this scenario, a processing latency of the image is a very key indicator for measuring quality of service. Therefore, in this scenario, using the request scheduling system provided in this embodiment of this application can effectively reduce a quantity of user requests that violate the SLO, and maximize a computing capability of a cluster.

In addition, in an input-sensitive application scenario like cloud-based image beautification (there is a specific correlation between an image size and an image processing speed), it is also very necessary to estimate a processing latency of each user request. Therefore, in this application, regression prediction of a segment-based sliding window policy is used to estimate a processing latency of an input-sensitive application. For example, image inputs carried in the target user request are classified into five levels, and regression prediction is performed on an input of each level in a form of a sliding window from three aspects: a cluster, a node, and a pod in sequence, as shown in Table 1.

Table 1 Estimate request processing latency according to a segment-based sliding window policy

| Image size range | Current estimated latency |
|---|---|
| (0 K - 500 K] | 50 ms |
| (500 K, 1 M] | 80 ms |
| (1 M, 5 M] | 200 ms |
| (5 M, 10 M] | 350 ms |
| (10 M, -) | 500 ms |

That regression prediction is performed on the input of each level in the form of the sliding window from the three aspects: the cluster, the node, and the pod in sequence means that when receiving the user request, the first scheduling module 101 determines, from a perspective of the cluster, whether the user request meets the receiving condition. Then, after the user request reaches a queue head of the request queue and is determined as the target user request, when selecting a pod for the target user request, the first scheduling module 101 selects a candidate pod that has a lowest load and that meets the execution condition as the target pod. Alternatively, after the user request reaches a queue head of the request queue and is determined as the target user request, because an existing pod does not meet the execution condition, when a new pod needs to be created, the first scheduling module 101 selects the target node when the node creation condition is met, may select the target node in a dimension of a node in consideration of a processing speed of the user request in the target node, and creates a pod in a better node as much as possible, to reduce the subsequent processing latency of the target user request.

The latency-aware-based serverless request scheduling apparatus and system provided in this application have the following advantages:

After receiving the user request, the first scheduling module may preliminarily estimate a queuing latency and processing time (that is, perform determining based on the receiving condition), and perform fast failure processing on a user request that cannot be processed, to prevent the request from being blocked in the first scheduling module.

The segment-based sliding window policy is used to predict the request processing latency, which can more accurately sense a load status of a current pod, and the user request may be routed to the pod with the lowest load by using the data, to reduce occurrence of the user request that violates the SLO.

The load status of the pod may be sensed, and the queuing latency of each pod is predicted to allocate the user request to the pod with the lowest load, to avoid violating the SLO due to a mismatch between the user request and the pod.

Load and resource statuses of the node are sensed, and a capacity is preferentially expanded on a node with a strong processing capability (that is, the target node is selected), to avoid violation of the SLO caused by excessively long request processing time due to a request processing capability difference between nodes.

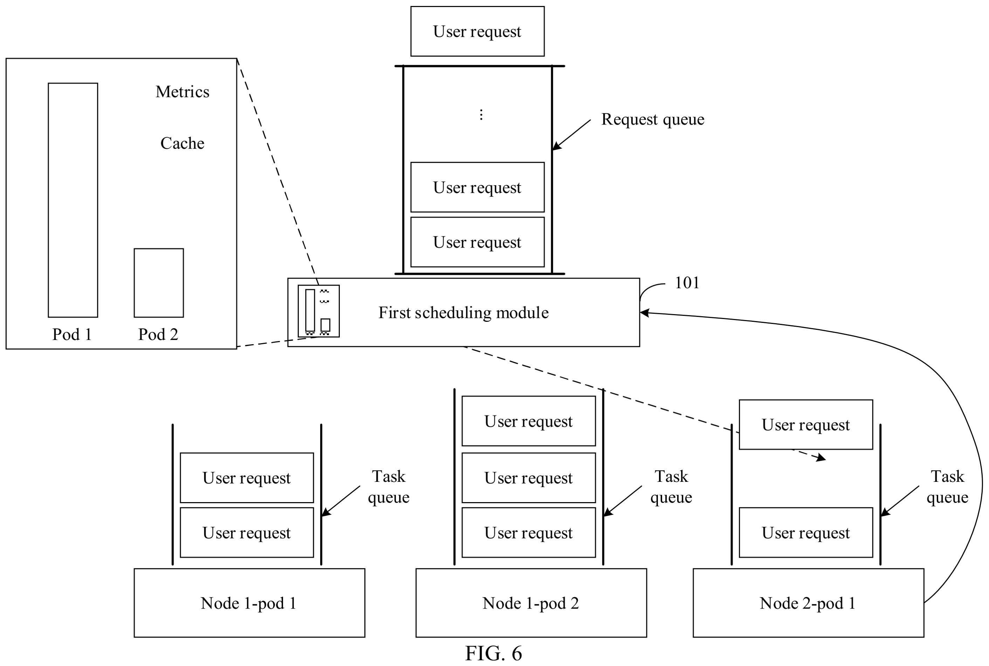

In some embodiments, for a function service product in a public cloud, for example, HUAWEI CLOUD FunctionGraph, AWS lambda, and Azure Function, in a public cloud scenario, service requests of some users are also latency-sensitive, for example, a user-oriented scenario such as finance and commodity transaction. Most serverless products in related technologies still use concurrency as a decision indicator for elastic scaling. Generally, users cannot correctly set the indicator. If the indicator is set to be excessively small, each pod cannot maintain a saturated task queue, which can reduce the processing latency but result in resource waste. If the indicator is set to be excessively large, each pod may be overloaded, and a task at an end of a queue cannot be scheduled in a timely manner. As a result, some requests violate the SLO, affecting product revenue. However, according to the request scheduling apparatus and system provided in embodiments of this application, as shown in FIG. 6, below a user request, an SLO and a request queuing latency are used as indicators for measuring a load of a pod. Compared with the foregoing concurrency method, user costs can be reduced, and a rate of requests that violate the SLO can be reduced.

An embodiment of this application provides a latency-aware-based serverless request scheduling method, applied to the foregoing latency-aware-based serverless request scheduling apparatus. The method includes:

determining a determined user request at a queue head of a current request queue as a target user request, and generating a pod creation request when determining that a target pod that meets an execution condition and that is to execute the target user request is absent;

when determining, based on the pod creation request, that a new pod meets a node creation condition, selecting a target node from a plurality of nodes, creating the new pod in the target node, and determining information about the new pod; and

managing the new pod based on the information about the new pod, determining the new pod as a target pod, and sending the target user request to the target pod, so that the target pod executes the received target user request.

Beneficial effects of the latency-aware-based serverless request scheduling method provided in the still another aspect and the possible implementations of the still another aspect are the same as those of the latency-aware-based serverless request scheduling apparatus provided in the one aspect and the possible implementations of the one aspect. To avoid redundancy, details are not described herein again.

In a possible implementation, the execution condition is that a sum of estimated duration for processing the target user request, total network communication duration, and total duration for which a pod processes all user requests in a current task queue is less than remaining duration from current time to violating an SLO of the target user request.

In a possible implementation, the node creation condition is that a sum of cold start duration of a pod, duration required for the first scheduling module to manage the new pod, and estimated duration for processing the target user request is less than remaining duration from current time to violating an SLO of the target user request.

In a possible implementation, the method further includes: receiving a new user request; and when determining that the user request meets a receiving condition, adding the user request to the current request queue based on an SLO deadline of the user request.

In a possible implementation, the method further includes: when determining that the user request does not meet a receiving condition, determining that the user request fails to be executed, and returning a request failure report.

In a possible implementation, the receiving condition is that a sum of an average latency of processing the user request by a cluster, a queuing latency of the user request in the current request queue, and a network transmission latency in the cluster is less than remaining duration from current time to violating the user request.

In a possible implementation, the method further includes: when determining that the target pod that meets the execution condition and that is to execute the target user request is present, determining a pod that meets the execution condition as the target pod, and sending the target user request to the target pod.

In a possible implementation, determining the pod that meets the execution condition as the target pod includes: selecting a pod with a lowest load as a candidate pod from a plurality of currently managed pods by using an SLO model and task queue information of each pod; and when the candidate pod meets the execution condition, determining the candidate pod as the target pod.

In a possible implementation, the method further includes: when determining, based on the pod creation request, that the new pod does not meet the node creation condition, determining that the target user request fails to be executed, and returning a request failure report.

In a possible implementation, selecting the target node from the plurality of nodes, and creating the new pod in the target node includes: determining, by using a utility model and cluster status information, the target node from a node that meets a node condition in a plurality of nodes of a cluster; and creating the new pod in the target node, where the cluster status information includes resource utilization of each node, and the node condition is that a P95 latency of processing the target user request at a node level is less than remaining duration from current time to violating an SLO of the target user request.

For implementations and beneficial effects of the steps of the latency-aware-based serverless request scheduling method in this application, refer to the related descriptions of corresponding components in the foregoing latency-aware-based serverless request scheduling apparatus and system. To avoid redundancy, details are not described herein again.

In some embodiments, modules such as the first scheduling module 101, the second scheduling module 102, and the data repository 300 may all be implemented by using software, or may be implemented by using hardware. For example, the following uses the first scheduling module 101 as an example to describe an implementation of the first scheduling module 101. Similarly, for implementations of modules such as the second scheduling module 102 and the data repository 300, refer to the implementation of the first scheduling module 101.

The module is used as an example of a software functional unit, and the first scheduling module 101 may include code run on a computing instance. The computing instance may include at least one of a physical host (a computing device), a virtual machine, and a container. Further, there may be one or more computing instances. For example, the first scheduling module 101 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. One region may usually include a plurality of AZs.

Similarly, the plurality of hosts/virtual machines/containers configured to run the code may be distributed in a same virtual private cloud (virtual private cloud, VPC), or may be distributed in a plurality of VPCs. One VPC is usually disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit, and the first scheduling module 101 may include at least one computing device, for example, a server. Alternatively, the first scheduling module 101 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field programmable gate array (field-programmable gate array, FPGA), a generic array logic (generic array logic, GAL), or any combination thereof.

A plurality of computing devices included in the first scheduling module 101 may be distributed in a same region, or may be distributed in different regions. The plurality of computing devices included in the first scheduling module 101 may be distributed in a same AZ, or may be distributed in different AZs. Similarly, the plurality of computing devices included in the first scheduling module 101 may be distributed on a same VPC, or may be distributed on a plurality of VPCs. The plurality of computing devices may be any combination of computing devices such as a server, an ASIC, a PLD, a CPLD, an FPGA, and a GAL.

It should be noted that, in another embodiment, the first scheduling module 101 may be configured to perform any step in the latency-aware-based serverless request scheduling method in embodiments of this application, and a module such as the second scheduling module 102 may also be configured to perform any step in the latency-aware-based serverless request scheduling method. Steps implemented by the modules may be specified as required, the modules respectively implement different steps in the latency-aware-based serverless request scheduling method, to implement all functions of the latency-aware-based serverless request scheduling apparatus and system.

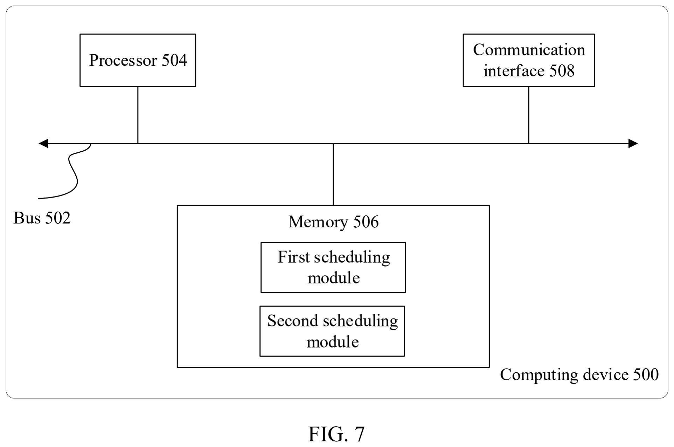

This application further provides a computing device 500. As shown in FIG. 7, the computing device 500 includes a bus 502, a processor 504, a memory 506, and a communication interface 508. The processor 504, the memory 506, and the communication interface 508 communicate with each other through the bus 502. The computing device 500 may be a server or a terminal device. It should be understood that a quantity of processors and a quantity of memories in the computing device 100 are not limited in this application.

The bus 502 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is for representing the bus in FIG. 7, but this does not mean that there is only one bus or only one type of bus. The bus 504 may include a path for transmitting information between components (for example, the memory 506, the processor 504, and the communication interface 508) of the computing device 500.

The processor 504 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 506 may include a volatile memory (volatile memory), for example, a random access memory (random access memory, RAM). The processor 504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 506 stores executable program code, and the processor 504 executes the executable program code to separately implement functions of the foregoing modules such as the first scheduling module, the second scheduling module, and the data repository, so as to implement the latency-aware-based serverless request scheduling method. In other words, the memory 506 stores instructions used to perform the latency-aware-based serverless request scheduling method.

Alternatively, the memory 506 stores executable code, and the processor 504 executes the executable code to separately implement functions of the foregoing latency-aware-based serverless request scheduling apparatus, so as to implement the latency-aware-based serverless request scheduling method. In other words, the memory 506 stores instructions used to perform the latency-aware-based serverless request scheduling method.

The communication interface 503 uses a transceiver module such as, but not limited to, a network interface card or a transceiver to implement communication between the computing device 500 and another device or a communication network.

An embodiment of this application provides a latency-aware-based serverless request scheduling apparatus, including a processor and a memory configured to store instructions executable by the processor, where the processor is configured to implement the foregoing method when executing the instructions.

An embodiment of this application provides a non-volatile computer-readable storage medium. The non-volatile computer-readable storage medium stores computer program instructions. When the computer program instructions are executed by a processor, the foregoing method is implemented.

An embodiment of this application provides a computer program product. The computer program product includes computer-readable code or a non-volatile computer-readable storage medium carrying the computer-readable code. When the computer-readable code is run in a processor of an electronic device, the processor of the electronic device performs the foregoing method.

The computer-readable storage medium may be a tangible device that can retain and store instructions used by an instruction execution device. The computer-readable storage medium may be, for example, but is not limited to, an electric storage device, a magnetic storage device, an optical storage device, an electromagnetic storage device, a semiconductor storage device, or any proper combination of the above. More specific examples (non-exhaustive list) of the computer-readable storage medium include: a portable computer disk, a hard disk, a random access memory (Random Access Memory, RAM), a read-only memory (Read-Only Memory, ROM), an erasable programmable read-only memory (Electrically Programmable Read-Only Memory, EPROM, or flash memory), a static random access memory (Static Random Access Memory, SRAM), a portable compact disk read-only memory (Compact Disc Read-Only Memory, CD-ROM), a digital video disc (Digital Video Disc, DVD), a memory stick, a floppy disk, a mechanical coding device, for example, a punching card or a groove protrusion structure that stores instructions, and any proper combination thereof.

The computer-readable program instructions or code described herein can be downloaded from the computer-readable storage medium to various computing/processing devices, or download to an external computer or external storage device over a network, such as the Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives a computer-readable program instruction from the network and forwards the computer-readable program instruction for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include an object-oriented programming language such as Smalltalk and C++, and a conventional procedural programming language such as a "C" language or a similar programming language. The computer-readable program instructions may be completely executed on a user computer, partially executed on a user computer, executed as an independent software package, partially executed on a user computer and partially executed on a remote computer, or completely executed on a remote computer or server. In a case involving a remote computer, the remote computer may be connected to a user computer over any kind of network, including a local area network (Local Area Network, LAN) or a wide area network (Wide Area Network, WAN), or may be connected to an external computer (for example, connected over Internet using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and combinations of blocks in the flowcharts and/or block diagrams can be implemented by computer-readable program instructions.

These computer-readable program instructions can be provided to a processor of a general-purpose computer, special-purpose computer, or another programmable data processing apparatus, to generate a machine, such that the instructions which executed by the processor of the computer or the another programmable data processing apparatus generate an apparatus for implementing the functions/acts specified in one or more blocks of the flowcharts and/or block diagrams. These computer-readable program instructions may also be stored in a computer-readable storage medium. These instructions enable the computer, programmable data processing apparatus, and/or another device to work in a specified manner. Therefore, the computer-readable medium storing instructions includes a product that includes instructions for implementing the aspects of the functions/acts specified in one or more blocks of the flowcharts and/or block diagrams.

The computer-readable program instructions may also be loaded onto a computer, another programmable data processing apparatus, or another device, to cause a series of operational steps to be performed on the computer, the another programmable data processing apparatus, or the another device, to produce a computer-implemented process such that the instructions which are executed on the computer, the another programmable data processing apparatus, or the another device implement the functions/acts specified in one or more blocks of the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function.

It should also be noted that each block of the block diagrams and/or flowcharts, and a combination of blocks of the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of a plurality of. A single processor or another unit can implement several functions enumerated in the claims. Some measures are set forth in dependent claims that are different from each other, but this does not mean that these measures cannot be combined to produce a great effect.

The foregoing has described embodiments of this application. The foregoing descriptions are examples, not exhaustive, and are not limited to the disclosed embodiments. Without departing from the scope and spirit of the described embodiments, many modifications and changes are obvious to a person of ordinary skill in the art. The selection of terms used herein is intended to best explain the principles of embodiments, practical applications, or improvements to technologies in the market, or to enable another person of ordinary skill in the art to understand embodiments disclosed herein.

## Claims

1.    A latency-aware-based serverless request scheduling apparatus, wherein the apparatus comprises a first scheduling module and a second scheduling module, wherein

the first scheduling module is configured to: determine a determined user request at a queue head of a current request queue as a target user request, and send a pod creation request to the second scheduling module when determining that a target pod that meets an execution condition and that is to execute the target user request is absent;
the second scheduling module is configured to: when receiving the pod creation request and determining, based on the pod creation request, that a new pod meets a node creation condition, select a target node from a plurality of nodes, create the new pod in the target node, and send information about the new pod to the first scheduling module; and
the first scheduling module is further configured to manage the new pod based on the received information about the new pod, determine the new pod as a target pod, and send the target user request to the target pod, so that the target pod executes the received target user request.

**2.** The apparatus according to claim 1, wherein the execution condition is that a sum of estimated duration for processing the target user request, total network communication duration, and total duration for which a pod processes all user requests in a current task queue is less than remaining duration from current time to violating an SLO of the target user request; and/or

the node creation condition is that a sum of cold start duration of a pod, duration required for the first scheduling module to manage the new pod, and estimated duration for processing the target user request is less than remaining duration from current time to violating an SLO of the target user request.

**3.** The apparatus according to claim 1, wherein

the first scheduling module is further configured to: receive a new user request; and when determining that the user request meets a receiving condition, add the user request to the current request queue based on an SLO deadline of the user request; or when determining that the user request does not meet a receiving condition, determine that the user request fails to be executed, and return a request failure report, wherein

the receiving condition is that a sum of an average latency of processing the user request by a cluster, a queuing latency of the user request in the current request queue, and a network transmission latency in the cluster is less than remaining duration from current time to violating the user request.

**4.** The apparatus according to claim 2, wherein

the first scheduling module is further configured to: when determining that the target pod that meets the execution condition and that is to execute the target user request is present, determine a pod that meets the execution condition as the target pod, and send the target user request to the target pod.

**5.** The apparatus according to claim 4, wherein determining the pod that meets the execution condition as the target pod comprises:

selecting a pod with a lowest load as a candidate pod from a plurality of currently managed pods by using an SLO model and task queue information of each pod; and

when the candidate pod meets the execution condition, determining the candidate pod as the target pod.

**6.** The apparatus according to claim 1, wherein

the second scheduling module is further configured to: when determining, based on the pod creation request, that the new pod does not meet the node creation condition, determine that the target user request fails to be executed, and return a request failure report.

**7.** The apparatus according to claim 1, wherein selecting the target node from the plurality of nodes, and creating the new pod in the target node comprises:

determining, by using a utility model and cluster status information, the target node from a node that meets a node condition in a plurality of nodes of a cluster; and

creating the new pod in the target node, wherein

the cluster status information comprises resource utilization of each node, and the node condition is that a P95 latency of processing the target user request at a node level is less than remaining duration from current time to violating an SLO of the target user request.

**8.** A latency-aware-based serverless request scheduling system, comprising a latency-aware-based serverless request scheduling apparatus and a serverless computing resource cluster, wherein the apparatus comprises a first scheduling module and a second scheduling module, the serverless computing resource cluster comprises a plurality of nodes, and each node comprises at least one pod, wherein

the first scheduling module is configured to: determine a determined user request at a queue head of a current request queue as a target user request, and send a pod creation request to the second scheduling module when determining that a target pod that meets an execution condition and that is to execute the target user request is absent;

the second scheduling module is configured to: when receiving the pod creation request and determining, based on the pod creation request, that a new pod meets a node creation condition, select a target node from a plurality of nodes, create the new pod in the target node, and send information about the new pod to the first scheduling module; and

the first scheduling module is further configured to manage the new pod based on the received information about the new pod, determine the new pod as a target pod, and send the target user request to the target pod, so that the target pod executes the received target user request.

9. The system according to claim 8, wherein the execution condition is that a sum of estimated duration for processing the target user request, total network communication duration, and total duration for which a pod processes all user requests in a current task queue is less than remaining duration from current time to violating an SLO of the target user request; and/or
the node creation condition is that a sum of cold start duration of a pod, duration required for the first scheduling module to manage the new pod, and estimated duration for processing the target user request is less than remaining duration from current time to violating an SLO of the target user request.

10. The system according to claim 8, wherein

the first scheduling module is further configured to: receive a new user request; and when determining that the user request meets a receiving condition, add the user request to the current request queue based on an SLO deadline of the user request; or when determining that the user request does not meet a receiving condition, determine that the user request fails to be executed, and return a request failure report, wherein
the receiving condition is that a sum of an average latency of processing the user request by a cluster, a queuing latency of the user request in the current request queue, and a network transmission latency in the cluster is less than remaining duration from current time to violating the user request.

11. The system according to claim 9, wherein
the first scheduling module is further configured to: when determining that the target pod that meets the execution condition and that is to execute the target user request is present, determine a pod that meets the execution condition as the target pod, and send the target user request to the target pod.

12. The system according to claim 11, wherein determining the pod that meets the execution condition as the target pod comprises:

selecting a pod with a lowest load as a candidate pod from a plurality of currently managed pods by using an SLO model and task queue information of each pod; and
when the candidate pod meets the execution condition, determining the candidate pod as the target pod, wherein the system further comprises a data repository, and the task queue information is sent by the data repository.

13. The system according to claim 8, wherein
the second scheduling module is further configured to: when determining, based on the pod creation request, that the new pod does not meet the node creation condition, determine that the target user request fails to be executed, and return a request failure report.

14. The system according to claim 8, wherein selecting the target node from the plurality of nodes, and creating the new pod in the target node comprises:

determining, by using a utility model and cluster status information, the target node from a node that meets a node condition in a plurality of nodes of a cluster; and
creating the new pod in the target node, wherein
the cluster status information comprises resource utilization of each node, the system further comprises a data repository, the cluster status information is sent by the data repository, and the node condition is that a P95 latency of processing the target user request at a node level is less than remaining duration from current time to violating an SLO of the target user request.

15. A latency-aware-based serverless request scheduling method, wherein the method comprises:

determining a determined user request at a queue head of a current request queue as a target user request, and generating a pod creation request when determining that a target pod that meets an execution condition and that is to execute the target user request is absent;
when determining, based on the pod creation request, that a new pod meets a node creation condition, selecting a target node from a plurality of nodes, creating the new pod in the target node, and determining information about the new pod; and

managing the new pod based on the information about the new pod, determining the new pod as a target pod, and sending the target user request to the target pod, so that the target pod executes the received target user request.

16. The method according to claim 15, wherein the execution condition is that a sum of estimated duration for processing the target user request, total network communication duration, and total duration for which a pod processes all user requests in a current task queue is less than remaining duration from current time to violating an SLO of the target user request; and/or

the node creation condition is that a sum of cold start duration of a pod, duration required for the first scheduling module to manage the new pod, and estimated duration for processing the target user request is less than remaining duration from current time to violating an SLO of the target user request.

17. The method according to claim 15, wherein the method further comprises:

receiving a new user request; and when determining that the user request meets a receiving condition, adding the user request to the current request queue based on an SLO deadline of the user request; or when determining that the user request does not meet a receiving condition, determining that the user request fails to be executed, and returning a request failure report, wherein

the receiving condition is that a sum of an average latency of processing the user request by a cluster, a queuing latency of the user request in the current request queue, and a network transmission latency in the cluster is less than remaining duration from current time to violating the user request.

18. The method according to claim 16, wherein the method further comprises:
when determining that the target pod that meets the execution condition and that is to execute the target user request is present, determining a pod that meets the execution condition as the target pod, and sending the target user request to the target pod.

19. The method according to claim 18, wherein determining the pod that meets the execution condition as the target pod comprises:

selecting a pod with a lowest load as a candidate pod from a plurality of currently managed pods by using an SLO model and task queue information of each pod; and

when the candidate pod meets the execution condition, determining the candidate pod as the target pod.

20. The method according to claim 15, wherein the method further comprises:
when determining, based on the pod creation request, that the new pod does not meet the node creation condition, determining that the target user request fails to be executed, and returning a request failure report.

21. The method according to claim 14, wherein selecting the target node from the plurality of nodes, and creating the new pod in the target node comprises:

determining, by using a utility model and cluster status information, the target node from a node that meets a node condition in a plurality of nodes of a cluster; and

creating the new pod in the target node, wherein

the cluster status information comprises resource utilization of each node, and the node condition is that a P95 latency of processing the target user request at a node level is less than remaining duration from current time to violating an SLO of the target user request.

22. A latency-aware-based serverless request scheduling apparatus, comprising:

a processor; and

a memory, configured to store instructions executable by the processor, wherein

the processor is configured to implement the method according to any one of claims 15 to 21 when executing the instructions.

23. A non-volatile computer-readable storage medium, storing computer program instructions, wherein when the computer program instructions are executed by a processor, the method according to any one of claims 15 to 21 is implemented.

**24.** A computer program product, comprising computer-readable code or a non-volatile computer-readable storage medium carrying computer-readable code, wherein when the computer-readable code is run in an electronic device, a processor in the electronic device performs the method according to any one of claims 15 to 21.

Start

Is an upper limit specified for request concurrency?

Yes

Is the request concurrency less than 3?

No

No

Yes

Randomly select two pods, and select a pod with a lower load in the two pods

Traverse all pods until a pod whose length of a current request queue is less than the request concurrency is found

Select a pod by using a round robin round robin scheduling algorithm

End

FIG. 1

FIG. 2

EP 4 708 048 A1

Receive a user request — S401

Does the user request meet a receiving condition? — S402

No →

Yes ↓

Add the user request to a request queue and sort the user request based on an SLO deadline — S403

Determine a target user request at a queue head of the current request queue — S404

Is a target pod that meets an execution condition and that is to execute the target user request present? — S405

No →

Does a new pod that is to execute the target user request meet a node creation condition? — S406

No →

Yes ↓

Send the target user request to the corresponding target pod — S407

Create the new pod and determine the new pod as the target pod — S408

Discard the user request that does not meet the condition, and return a request report failure — S409

FIG. 3

Parameter configuration

Function name:   foo

CPU (m):                                    500

Memory (M)                                  500

Timeout duration (s):            120

                                                          M

Latency-sensitive

— SLO (ms):                        300

                                                          SLO

FIG. 4

Raw image → **Basic (noise reduction) at a 100-ms level** — 2.4 M → **Basic (human portrait extraction) at the 100-ms level** — 2.4 M → **Generate (skin beautification) at a second level** — 700 k → **Generate (super-resolution) at the second level** — 1 M → **Generate (image synthesis) at the 100-ms level** — 4 M → Beautified image — 6 M

FIG. 5

FIG. 6

FIG. 7

## INTERNATIONAL SEARCH REPORT

| International application No. |
| --- |
| **PCT/CN2024/092825** |

### A.   CLASSIFICATION OF SUBJECT MATTER

G06F9/50(2006.01)i

According to International Patent Classification (IPC) or to both national classification and IPC

### B.   FIELDS SEARCHED

Minimum documentation searched (classification system followed by classification symbols)

IPC: G06F H04L

Documentation searched other than minimum documentation to the extent that such documents are included in the fields searched

Electronic data base consulted during the international search (name of data base and, where practicable, search terms used)

DWPI, CNTXT, ENTXTC, CNKI: Kubernetes, 新建, 创建, pod, 纳管, 服务级别目标, SLO, 违反, 违规, 满足, 延迟, 时延, 延时, 迟延, serverless, New, build, create, service level objective, violation, fulfillment, delay, latency

### C.   DOCUMENTS CONSIDERED TO BE RELEVANT

| Category* | Citation of document, with indication, where appropriate, of the relevant passages | Relevant to claim No. |
| --- | --- | --- |
| X | CN 112000477 A (BEIJING INSPUR DATA TECHNOLOGY CO., LTD.) 27 November 2020 (2020-11-27)<br>claims 1 and 5 | 1, 8, 15, 22-24 |
| Y | CN 112000477 A (BEIJING INSPUR DATA TECHNOLOGY CO., LTD.) 27 November 2020 (2020-11-27)<br>claims 1 and 5 | 3, 10, 17 |
| Y | US 2023141570 A1 (MICROSOFT TECHNOLOGY LICENSING, L.L.C.) 11 May 2023 (2023-05-11)<br>description, paragraphs 55 and 71 | 3, 10, 17 |
| A | CN 110795234 A (SUZHOU INSPUR INTELLIGENT TECHNOLOGY CO., LTD.) 14 February 2020 (2020-02-14)<br>entire document | 1-24 |
| A | CN 116069512 A (ZHEJIANG LAB) 05 May 2023 (2023-05-05)<br>entire document | 1-24 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 August 2024** | **20 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/092825**

### C. DOCUMENTS CONSIDERED TO BE RELEVANT

| Category* | Citation of document, with indication, where appropriate, of the relevant passages | Relevant to claim No. |
|---|---|---|
| A | US 2022414503 A1 (KOREA ADVANCED INSTITUTE OF SCIENCE AND TECHNOLOGY) 29 December 2022 (2022-12-29) entire document | 1-24 |

## INTERNATIONAL SEARCH REPORT
### Information on patent family members

International application No.

**PCT/CN2024/092825**

| Patent document cited in search report | | | Publication date (day/month/year) | Patent family member(s) | | | Publication date (day/month/year) |
|---|---|---|---|---|---|---|---|
| CN | 112000477 | A | 27 November 2020 | None | | | |
| US | 2023141570 | A1 | 11 May 2023 | None | | | |
| CN | 110795234 | A | 14 February 2020 | None | | | |
| CN | 116069512 | A | 05 May 2023 | None | | | |
| US | 2022414503 | A1 | 29 December 2022 | KR | 20220170428 | A | 30 December 2022 |
| | | | | KR | 102585591 | B1 | 10 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310590809